# EUROPEAN PATENT APPLICATION

(11) **EP 4 684 927 A1**
(43) Date of publication of application: **28.01.2026**
(21) Application number: 24774709.0
(22) Date of filing: 07.03.2024
(51) Int. Cl.: B25J 13/00, G06F 3/16, G06F 16/338, G06N 3/008

(54) **ACTION CONTROL SYSTEM, INFORMATION PRESENTATION SYSTEM, PROGRAM, AND ROBOT**

(30) Priority: 23.03.2023 JP 2023047332; 05.04.2023 JP 2023061768
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/008834
(87) International publication number: WO 2024/195570

(57) **Abstract**

An action control system includes: an answer generation unit that generates an answer to a question of a user based on a conversation function of causing a robot and the user to have a conversation with each other; an emotion determination unit that determines an emotion of the user in response to the answer based on an emotion estimation function of estimating the emotion of the user; and an action determination unit that determines an action of the robot corresponding to the emotion.

## Description

### Technical Field

The present disclosure relates to an action control system, an information presentation system, a program, and a robot.

### Background Art

PTL 1 discloses a technique for determining an appropriate action of a robot with respect to a state of a user. In the related art of PTL 1, a reaction of a user in a case in which the robot executes a specific action is recognized, and in a case in which an action of the robot in response to the recognized reaction of the user cannot be determined, the action of the robot is updated by receiving information regarding an action suitable for the recognized state of the user from a server.

### Citation List

### Patent Literature

PTL 1: JP 6053847 B

### SUMMARY OF INVENTION

### Technical Problem

However, in the related art, there is room for improvement in causing a robot to execute an appropriate action in response to a question from a user.

### Solution to Problem

According to a first aspect of the disclosure, an action control system is provided. The action control system includes: an answer generation unit that generates an answer to a question of a user based on a conversation function of causing a robot and the user to have a conversation with each other; an emotion determination unit that determines an emotion of the user in response to the answer based on an emotion estimation function of estimating the emotion of the user; and an action determination unit that determines an action of the robot corresponding to the emotion.

The action determination unit may determine a first specific action in a case in which the emotion indicates a first emotion of the user, and determine a second specific action different from the first specific action in a case in which the emotion indicates a second emotion different from the first emotion of the user.

The action determination unit may determine, as the first specific action, an operation of bringing a hand of the robot into contact with a hand of the user by linking the hand of the robot with a movement of an arm of the user in a case in which the first emotion is happiness of the user, and determine, as the second specific action, an operation of raising the hand of the robot to an upper portion of the robot without linking the hand with the movement of the arm of the user in a case in which the second emotion is anger of the user.

According to a second aspect of the disclosure, a program is provided. The program causes a computer to function as the action control system.

According to a third aspect of the disclosure, an information presentation system is provided. The information presentation system includes: a search unit that performs a search based on character information indicating an utterance content of a user; and a presentation unit that presents a search result of the search unit to the user by at least one of an output of a voice, display of a text, or display of an image.

The information presentation system may further include: an order placement unit that generates voice data for performing order placement to a store and performs order placement to the store by outputting the voice data in a case in which an utterance of the user in response to the search result presented by the presentation unit is a content of requesting order placement to the store included in the search result presented by the presentation unit.

According to a fourth aspect of the disclosure, a program is provided. The program causes a computer to function as the information presentation system.

According to a fifth aspect of the disclosure, a robot is provided. A robot includes: the information presentation system; and an output device that outputs at least one of the voice, the text, and the image, which are presented by the presentation unit.

The outline of the above disclosure does not enumerate all the necessary features of the disclosure. A subcombination of these feature groups may also be the disclosure.

### BRIEF DESCRIPTION OF DRAWINGS

Fig. 1 is a diagram schematically illustrating an example of a system 1 according to each embodiment.
Fig. 2 is a diagram schematically illustrating a functional configuration of a robot 100 according to a first embodiment.
Fig. 3 is a diagram schematically illustrating an example of an operation flow related to an operation of determining an action in the robot 100 according to the first embodiment.
Fig. 4 is a diagram schematically illustrating an example of a hardware configuration of a computer 1200 according to each embodiment.
Fig. 5 schematically illustrates a functional configuration of a robot 100 according to a second embodiment.
Fig. 6 schematically illustrates an example of an operation flow by the robot 100 according to the second embodiment.

### DESCRIPTION OF EMBODIMENTS

Hereinafter, the disclosure will be described through embodiments of the disclosure, but the following embodiments do not limit the disclosure according to the claims. Not all combinations of features described in the embodiments are essential to the solution of the disclosure.

### [First Embodiment]

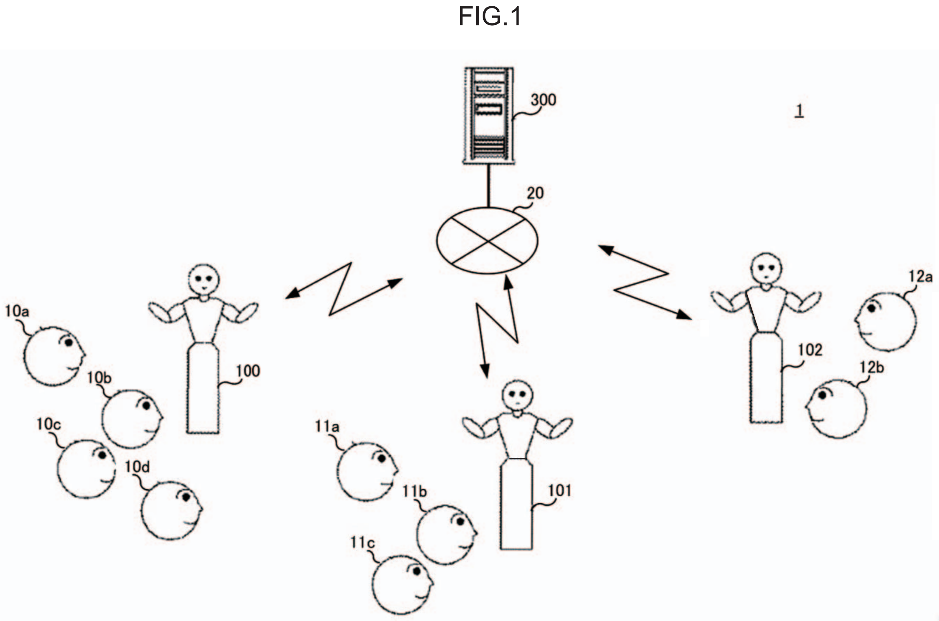

Fig. 1 schematically illustrates an example of a system 1 according to the present embodiment. The system 1 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the present embodiment, the user 10a, the user 10b, the user 10c, and the user 10d may be collectively referred to as a user 10. The user 11a, the user 11b, and the user 11c may be collectively referred to as a user 11. The user 12a and the user 12b may be collectively referred to as a user 12. The robot 101 and the robot 102 have substantially the same functions as those of the robot 100. Therefore, the system 1 will be described focusing on the function of the robot 100.

The robot 100 has a conversation with the user 10 and provides a video to the user 10. At this time, the robot 100 provides a conversation with the user 10, a video to the user 10, and the like in cooperation with the server 300 and the like that can communicate via a communication network 20. For example, the robot 100 not only learns an appropriate conversation by itself, but also performs learning so that a conversation with the user 10 can proceed more appropriately in cooperation with the server 300. The robot 100 causes the server 300 to record the captured video data and the like of the user 10, requests the server 300 to transmit the video data and the like if necessary, and provides the video data and the like to the user 10.

The robot 100 has an emotion value indicating the type of the emotion of the robot. For example, the robot 100 has emotion values indicating the strength of the respective emotions of "happiness", "anger", "sorrow", "pleasure", "enjoyment", "discomfort", "security", "anxiety", "sadness", "excitement", "worry", "relief", "fulfillment", "emptiness", and "normal". For example, in a case in which the robot 100 has a conversation with the user 10 in a state where the emotion value of excitement is large, the robot emits a voice at a fast speed. As described above, the robot 100 can express the emotion of the robot by an action.

The robot 100 may be configured to determine the action of the robot 100 corresponding to the emotion of the user 10 by matching an artificial intelligence (AI) chat engine with an emotion engine. Specifically, the robot 100 may be configured to receive a question from the user 10, determine an emotion of the user 10 for the question, and determine an action of the robot 100 corresponding to the determined emotion.

More specifically, in a case in which the robot 100 receives a question from the user 10, the robot 100 automatically generates an answer to the question by using a chat engine set in advance. The chat engine may be interpreted as an algorithm and an operation for automatic conversation processing with text. Since the chat engine is known as disclosed in, for example, Japanese Patent Application Laid-Open (JP-A) No. 2018-081444, a detailed description thereof will be omitted.

The robot 100 matches what type of emotion of the user 10 corresponds to the content of the answer, by using an emotion engine set in advance, and performs a specific operation based on the matching emotion, that is, a specific action. The emotion engine has a predetermined emotion generation algorithm. As the emotion generation algorithm, a known technique (see, for example, Japanese Patent No. 6351528) can be applied. For matching the answer to the question with the emotion of the user 10, for example, a model generated in advance by machine learning may be used.

The specific action may include a gesture and motioning of the robot 100. Specifically, the specific action is a high-five gesture, a gesture of swinging up a fist, or the like. More specifically, in a case in which the emotion of the user 10 is "happiness", the robot 100 can make a high-five gesture as the specific action. In a case in which the emotion of the user 10 is "anger", the robot 100 can make a gesture of swinging up a fist as the specific action. The specific action may include, in addition to the gesture of the robot 100, the movement of the finger of the robot 100, the movement of the trunk of the robot 100, the movement of the head of the robot 100, a change in the facial expression of the robot 100, and the like.

As described above, the robot 100 has an ability to express the emotion of the user 10 with gestures by using the robot hand and combining the emotion engine with the chat engine. By matching the answer to the question with the emotion of the user 10, the robot 100 can take action by sensing an atmosphere or the like of a place that is not explicit.

The robot 100 has a function of recognizing an action of the user 10. The robot 100 recognizes the action of the user 10 by analyzing a face image of the user 10 acquired by a camera function and the voice of the user 10 acquired by a microphone function. The robot 100 determines an action to be executed by the robot 100 based on the recognized action of the user 10 or the like.

The robot 100 stores a rule defining an action to be executed by the robot 100 based on the action of the user 10, and performs various actions in accordance with the rule.

Specifically, the robot 100 has a reaction rule for determining an action of the robot 100 based on an action of the user 10. In the reaction rule, for example, in response to a case in which the action of the user 10 is "laughing", an action of "laughing" is defined as the action of the robot 100. In the reaction rule, in response to a case in which the action of the user 10 is "getting angry", an action of "apologizing" is defined as the action of the robot 100. In the reaction rule, in response to a case in which the action of the user 10 is "questioning", an action of "answering" is defined as the action of the robot 100. In the reaction rule, in response to a case in which the action of the user 10 is "being sad", an action of "calling out" is defined as the action of the robot 100.

In a case in which the robot 100 recognizes that the action of the user 10 is "laughing" based on the reaction rule, the robot selects the action of "laughing" defined in the reaction rule, as the action to be executed by the robot 100. For example, in a case of selecting the action of "laughing", the robot 100 performs a "laughing" operation and outputs a voice representing a laughing sound. As a result, the robot 100 can laugh together with the user 10.

The robot 100 transmits, to the server 300, user reaction information indicating that a positive reaction has been obtained from the user 10 by this action. The user reaction information includes, for example, a user action of "laughing", an action of the robot 100 of "laughing", an attribute of the user 10, and that the reaction of the user 10 is positive.

The server 300 stores the user reaction information received from the robot 100. The server 300 receives and stores the user reaction information not only from the robot 100 but also from each of the robot 101 and the robot 102. The server 300 analyzes the user reaction information from the robot 100, the robot 101, and the robot 102, and updates the reaction rule.

The robot 100 receives the updated reaction rule from the server 300 by inquiring the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into the reaction rule of the robot 100.

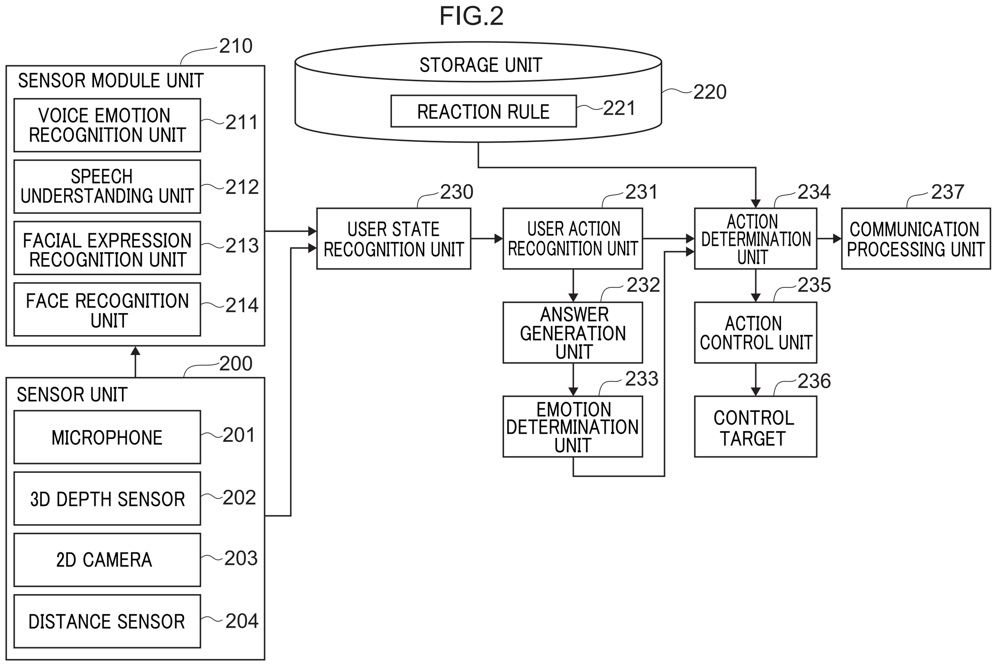

Fig. 2 schematically illustrates a functional configuration of the robot 100. The robot 100 includes a sensor unit 200, a sensor module unit 210, and a storage unit 220. The robot 100 further includes a user state recognition unit 230, a user action recognition unit 231, an answer generation unit 232, an emotion determination unit 233, an action determination unit 234, an action control unit 235, a control target 236, and a communication processing unit 237.

The control target 236 includes a display device, a speaker, an LED of an eye portion, a motor that drives an arm, a hand, a foot, or the like, and the like. The posture and gesture of the robot 100 are controlled by controlling the motor of the arm, the hand, the foot, and the like. Some of the emotions of the robot 100 can be expressed by controlling these motors. Some of the emotions of the robot 100 can be expressed by controlling a light emission state of the LED at the eye portion of the robot 100. The posture, gesture, and facial expression of the robot 100 are examples of the attitude of the robot 100.

The sensor unit 200 includes a microphone 201, a 3D depth sensor 202, a 2D camera 203, and a distance sensor 204. The microphone 201 continuously detects a voice and outputs voice data. The microphone 201 may be provided on the head of the robot 100 and may have a function of performing binaural recording. The 3D depth sensor 202 detects the contour of an object by continuously applying an infrared pattern and analyzing the infrared pattern from an infrared image continuously captured by an infrared camera. The 2D camera 203 is an example of an image sensor. The 2D camera 203 captures an image with visible light and generates video information of visible light. The distance sensor 204 applies, for example, a laser, an ultrasonic wave, or the like and detects a distance to the object. The sensor unit 200 may further include a clock, a gyro sensor, a touch sensor, a sensor for motor feedback, and the like.

Among the constituent elements of the robot 100 illustrated in Fig. 2, the constituent elements other than the control target 236 and the sensor unit 200 are examples of the constituent elements of an action control system 2 of the robot 100. The action control system 2 of the robot 100 controls the control target 236.

The storage unit 220 includes a reaction rule 221. At least a part of the storage unit 220 is implemented by a storage medium such as a memory. The storage unit 220 may include a person DB that stores a face image of the user 10, attribute information of the user 10, and the like. Among the constituent elements of the robot 100 illustrated in Fig. 2, the functions of the constituent elements other than the control target 236, the sensor unit 200, and the storage unit 220 can be realized by a CPU (Central Processing Unit) operating based on a program. For example, the functions of these constituent elements can be implemented as the operation of the CPU by basic software (OS: Operating System) and a program operating on the OS.

The sensor module unit 210 includes a voice emotion recognition unit 211, an utterance understanding unit 212, a facial expression recognition unit 213, and a face recognition unit 214. Information detected by the sensor unit 200 is input to the sensor module unit 210. The sensor module unit 210 analyzes information detected by the sensor unit 200 and outputs an analysis result to the user state recognition unit 230.

The voice emotion recognition unit 211 of the sensor module unit 210 analyzes the voice of the user 10 detected by the microphone 201 and recognizes the emotion of the user 10. For example, the voice emotion recognition unit 211 extracts a feature amount such as a frequency component of voice and recognizes the emotion of the user 10 based on the extracted feature amount. The utterance understanding unit 212 analyzes the voice of the user 10 detected by the microphone 201 and outputs character information indicating the utterance content of the user 10.

The facial expression recognition unit 213 recognizes the facial expression of the user 10 and the emotion of the user 10 from the image of the user 10 captured by the 2D camera 203. For example, the facial expression recognition unit 213 recognizes the facial expression and emotion of the user 10 based on the shapes, positional relationships, and the like of the eyes and the mouth.

The face recognition unit 214 recognizes the face of the user 10. For example, the face recognition unit 214 recognizes the user 10 by matching a face image stored in the person DB (not illustrated) with a face image of the user 10 captured by the 2D camera 203.

The user state recognition unit 230 recognizes the state of the user 10 based on the information analyzed by the sensor module unit 210. For example, the user state recognition unit 230 performs processing mainly related to perception, by using the analysis result of the sensor module unit 210. For example, the user state recognition unit 230 generates perception information such as "dad is alone." and "the probability that dad is not smiling is 90%." The user state recognition unit 230 performs processing of understanding the meaning of the generated perception information. For example, the user state recognition unit 230 generates semantic information such as "dad is alone and looks sad".

The user action recognition unit 231 recognizes an action of the user 10 based on the information analyzed by the sensor module unit 210 and the state of the user 10 recognized by the user state recognition unit 230. For example, the user action recognition unit 231 inputs the information analyzed by the sensor module unit 210 and the recognized state of the user 10 to a neural network learned in advance, acquires a probability of each of a plurality of predetermined action classifications (for example, "laughing", "getting angry", "questioning", and "being sad"), and recognizes the action classification having the highest probability as the action of the user 10.

In a case in which the user action recognition unit 231 recognizes that the action of the user is "questioning", the answer generation unit 232 generates an answer to the question of the user 10 based on the conversation function of causing the user 10 and the robot 100 to have a conversation. The conversation function may be interpreted as the chat engine described above. The answer generation unit 232 outputs information indicating the answer to the question, to the emotion determination unit 233.

The emotion determination unit 233 inputs the information indicating the answer to the question from the answer generation unit 232, and determines the emotion of the user 10 in response to the answer based on an emotion estimation function that estimates the emotion of the user 10. The emotion estimation function may be interpreted as the emotion engine described above.

In a case in which the emotion of the user 10 indicates a first emotion, the emotion determination unit 233 outputs information indicating the first emotion to the action determination unit 234. The first emotion may be interpreted as "happiness". In a case in which the emotion of the user 10 indicates a second emotion different from the first emotion, the emotion determination unit 233 outputs information indicating the second emotion to the action determination unit 234. The second emotion may be interpreted as "anger".

The first emotion and the second emotion are not limited to the above example, and may be, for example, "pleasant", "comfortable", "discomfort", "security", "anxiety", "sadness", "excitement", "worry", "relief", "fulfillment", "emptiness", and the like.

The action determination unit 234 determines an action of the robot 100 based on the action of the user 10 recognized by the user action recognition unit 231, the reaction rule 221, and the emotion determined by the emotion determination unit 233.

Specifically, the action determination unit 234 determines a first specific action in a case in which the emotion indicates the first emotion of the user 10, and determines a second specific action different from the first specific action in a case in which the emotion indicates the second emotion different from the first emotion of the user 10. The number of emotions and the number of specific actions are not limited to two, and may be three or more. The action determination unit 234 may determine a specific action among a plurality of emotions. The action determination unit 234 outputs information indicating the determined specific action to the action control unit 235.

More specifically, in a case in which the first emotion is "happiness" of the user 10, the action determination unit 234 determines, as the first specific action, an operation (high-five) of bringing the hand of the robot 100 into contact with the hand of the user 10 by linking the hand of the robot 100 with the movement of the arm of the user 10. In a case in which the second emotion is "anger" of the user 10, the action determination unit 234 determines, as the second specific action, an operation of raising the hand of the robot 100 to the upper portion of the robot 100 without linking the hand of the robot 100 to the movement of the arm of the user 10.

The action control unit 235 controls the control target 236 based on the action determined by the action determination unit 234.

Specifically, in a case in which the action determination unit 234 determines the first specific action, the action control unit 235 generates a drive command for a motor that drives the arm, the hand, or the like so as to stretch the arm toward the upper portion of the robot 100 while directing the palm side of the hand toward the user 10, in a state where the fingers of the hand are open. In a case in which the action determination unit 234 determines the second specific action, the action control unit 235 generates a drive command of the motor that drives the arm, the hand, or the like so as to operate the arm to raise a fist in a state where the fingers of the hand are closed and the fist is made.

In a case in which the action determination unit 234 determines an action including utterance, the action control unit 235 causes a speaker included in the control target 236 to output a voice. At this time, the action control unit 235 may determine the utterance speed of the voice based on the emotion value of the robot 100.

In a case in which the action determination unit 234 determines "an action of being pleased to be questioned by the user", the action control unit 235 outputs a voice (for example, "I am good at answering such a question") indicating being proud from the speaker. The action control unit 235 drives the motor of the arm, the hand, the foot, or the like to express a posture or a gesture (for example, an operation of slowly raising one hand) of the robot 100 indicating being proud.

The action control unit 235 may recognize a change in emotion of the user 10 in response to execution of the action determined by the action determination unit 234. For example, the action control unit 235 may recognize the change in emotion based on the voice or facial expression of the user 10. In addition, the action control unit 235 may recognize the change in emotion of the user 10 based on detection of an impact by the touch sensor included in the sensor unit 200. The action control unit 235 may recognize that the emotion of the user 10 is worsened in a case in which an impact is detected by the touch sensor included in the sensor unit 200, or may recognize that the emotion of the user 10 becomes good in a case in which it is determined that the reaction of the user 10 is, for example, laughing or happy from the detection result of the touch sensor included in the sensor unit 200. Information indicating the reaction of the user 10 is output to the communication processing unit 237.

The communication processing unit 237 handles communication with the server 300 (see Fig. 1). As described above, the communication processing unit 237 transmits the user reaction information to the server 300. The communication processing unit 237 receives the updated reaction rule from the server 300. In a case in which the communication processing unit 237 receives the updated reaction rule from the server 300, the communication processing unit 237 updates the reaction rule 221.

The server 300 performs communication between the robot 100, the robot 101, and the robot 102, and the server 300, receives the user reaction information transmitted from the robot 100, and updates the reaction rule based on the reaction rule including the action for which a positive reaction has been obtained.

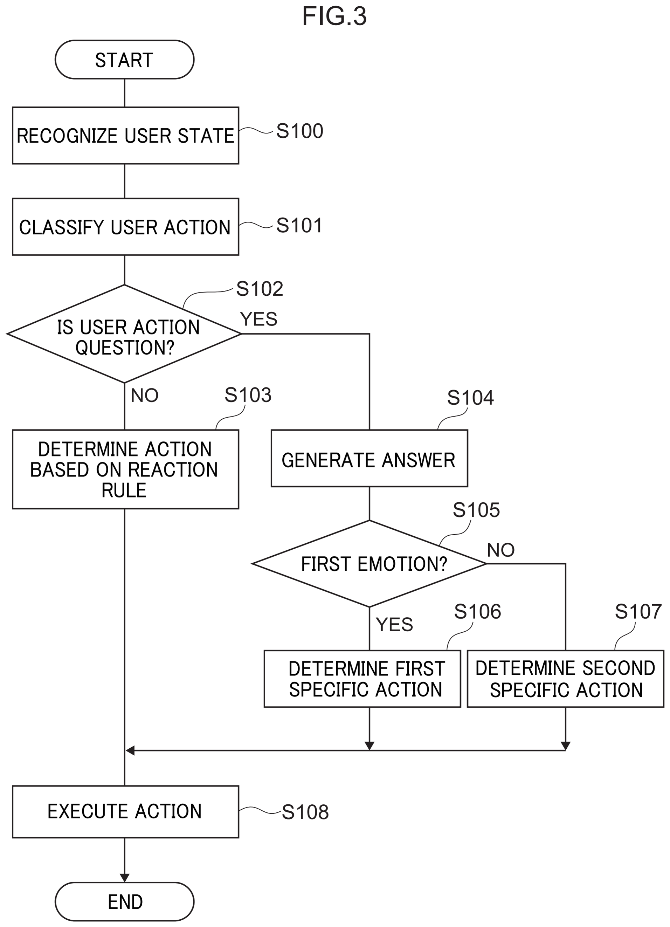

Fig. 3 schematically illustrates an example of an operation flow related to an operation of determining an action in the robot 100. The operation flow illustrated in Fig. 3 is repeatedly executed. At this time, it is assumed that the information analyzed by the sensor module unit 210 is input. "S" in the operation flow represents a step to be executed.

First, in Step S100, the user state recognition unit 230 recognizes the state of the user 10 based on the information analyzed by the sensor module unit 210.

In Step S101, the user action recognition unit 231 recognizes action classification of the user 10 based on the information analyzed by the sensor module unit 210 and the state of the user 10 recognized by the user state recognition unit 230.

In Step S102, it is determined whether or not the action classification of the user 10 recognized in Step S101 is "question". In a case in which the action classification of the user 10 recognized in Step S101 is "question", the processing proceeds to Step S104. In a case in which the action classification of the user 10 recognized in Step S101 is not "question", the processing proceeds to Step S103.

In Step S104, the answer generation unit 232 generates an answer to the question of the user 10 based on the conversation function of causing the user 10 and the robot 100 to have a conversation.

In Step S105, the emotion determination unit 233 determines an emotion of the user 10 in response to the answer based on the information from the answer generation unit 232 and the emotion estimation function. In a case in which the emotion of the user 10 indicates the first emotion, the processing proceeds to Step S106. In a case in which the emotion of the user 10 indicates the second emotion, the processing proceeds to Step S107.

In Step S106, the action determination unit 234 determines the first specific action based on the information indicating the first emotion determined by the emotion determination unit 233. In a case in which the first emotion is "happiness" of the user 10, the action determination unit 234 determines an operation of high-five as the first specific action.

In Step S107, the action determination unit 234 determines the second specific action based on the information indicating the second emotion determined by the emotion determination unit 233. In a case in which the second emotion is "anger" of the user 10, the action determination unit 234 determines an operation of raising a fist as the second specific action.

In Step S108, the action control unit 235 controls the control target 236 based on the action determined by the action determination unit 234.

As described above, the action control system 2 according to the disclosure is configured to generate an answer to a question of the user 10, determine an emotion of the user 10 in response to the answer, and determine an action of the robot 100 corresponding to the emotion. With this configuration, since it is possible to cause the robot 100 to execute an appropriate action in response to a question from the user 10, it is possible to give the robot 100 the ability to express the emotion of the user 10 by a gesture or the like.

The robot 100 is an example of an electronic device including the action control system 2. The application target of the action control system 2 is not limited to the robot 100, and the action control system 2 can be applied to various electronic devices. The function of the server 300 may be implemented by one or more computers. At least some functions of the server 300 may be implemented by a virtual machine. At least some of the functions of the server 300 may be implemented in a cloud.

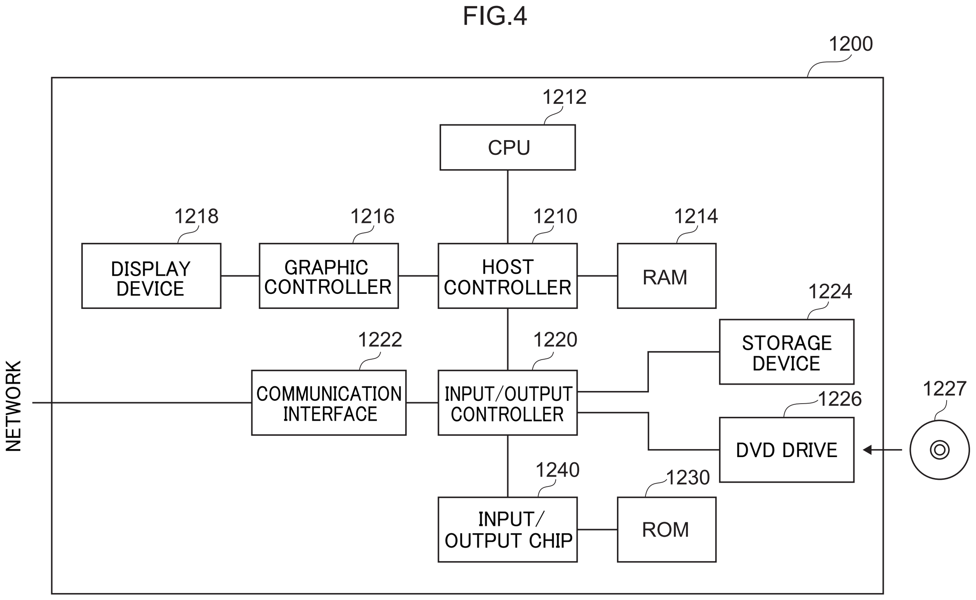

Fig. 4 is a diagram schematically illustrating an example of a hardware configuration of a computer 1200 that functions as the robot 100 and the server 300. A program installed on the computer 1200 can cause the computer 1200 to function as one or a plurality of "units" of the device according to the present embodiment, or cause the computer 1200 to execute an operation associated with the device according to the present embodiment or the one or plurality of "units" thereof, and/or cause the computer 1200 to execute a process according to the present embodiment or a stage of the process. Such a program may be executed by the CPU 1212 to cause the computer 1200 to perform certain operations associated with some or all of the blocks in the flowcharts and block diagrams described herein.

The computer 1200 according to the present embodiment includes a CPU 1212, a RAM 1214, and a graphic controller 1216, which are mutually connected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates in accordance with programs stored in the ROM 1230 and the RAM 1214, thereby controlling each unit. The graphic controller 1216 acquires image data generated by the CPU 1212 in a frame buffer or the like provided in the RAM 1214 or itself, and causes the image data to be displayed on the display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the program or data to the storage device 1224. The IC card drive reads the program and data from the IC card and/or writes the program and data to the IC card.

The ROM 1230 stores a boot program executed by the computer 1200 at the time of activation and/or a program depending on hardware of the computer 1200, in the ROM 1230. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in the programs is read by the computer 1200 and provides cooperation between the programs and the various types of hardware resources. The device or method may be configured by implementing operation or processing of information in accordance with use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in the recording medium such as the RAM 1214, the storage device 1224, the DVD-ROM 1227, or the IC card, transmits the read transmission data to the network, or writes reception data received from the network to a reception buffer area or the like provided on the recording medium.

The CPU 1212 may cause the RAM 1214 to read the entirety or a necessary portion of a file or database stored in an external recording medium such as the storage device 1224, the DVD drive 1226 (DVD-ROM 1227), an IC card, or the like, and may execute various types of processing on data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information search/replacement, and the like, which are described throughout the disclosure and designated by an instruction sequence of a program, and writes back the results to the RAM 1214. The CPU 1212 may search for information in a file, a database, or the like in the recording medium. For example, in a case in which a plurality of entries each having the attribute value of the first attribute associated with the attribute value of the second attribute are stored in the recording medium, the CPU 1212 may search for an entry in which the attribute value of the first attribute coincides with the specified condition among the plurality of entries, read the attribute value of the second attribute stored in the entry, and thereby acquire the attribute value of the second attribute associated with the first attribute satisfying the predetermined condition.

The programs or software modules described above may be stored in a computer-readable storage medium on the computer 1200 or near the computer 1200. A recording medium such as a hard disk or a RAM provided in a server system connected to a dedicated communication network or the Internet can be used as the computer-readable storage medium, thereby providing a program to the computer 1200 via the network.

The blocks in the flowcharts and block diagrams in the present embodiment may represent stages of a process in which an operation is performed or "units" of a device that is responsible for performing the operation. Specific stages and "units" may be implemented by a dedicated circuit, a programmable circuit provided with computer-readable instructions stored on a computer-readable storage medium, and/or a processor provided with computer-readable instructions stored on a computer-readable storage medium. The dedicated circuit may include a digital and/or analog hardware circuit, and may include an integrated circuit (IC) and/or a discrete circuit. The programmable circuit may include a reconfigurable hardware circuit such as field programmable gate arrays (FPGAs) and programmable logic arrays (PLAs), which includes, for example, logical products, disjunction, exclusive disjunction, NAND, NOR, and other logical operations, flip-flops, registers, and memory elements.

A computer-readable storage medium may include any tangible device capable of storing instructions for execution by a suitable device, and as a result, a computer-readable storage medium having instructions stored therein includes an article including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include source code or object code written in any combination of one or more programming languages, including assembler instructions, instruction set architecture (ISA) instructions, machine instructions, machine-dependent instructions, microcode, firmware instructions, state-setting data, or an object oriented programming language such as Smalltalk, JAVA (registered trademark), C++, or the like, and conventional procedural programming languages, such as the "C" programming language or similar programming languages.

The computer-readable instructions may be provided for a processor of a general purpose computer, special purpose computer, or other programmable data processing device, or programmable circuit, either locally or over a wide area network (WAN), such as a local area network (LAN), the Internet, or the like, to cause the processor or programmable circuit of the general purpose computer, special purpose computer, or other programmable data processing device to execute the computer-readable instructions to generate means for the processor or programmable circuit to perform the operations specified in the flowcharts or block diagrams. Examples of the processor include a computer processor, a processing unit, a microprocessor, a digital signal processor, a controller, a microcontroller, and the like.

### [Second Embodiment]

Next, a second embodiment according to the disclosure will be described. The same portions as those of the first embodiment are denoted by the same reference signs, and the description thereof will be omitted.

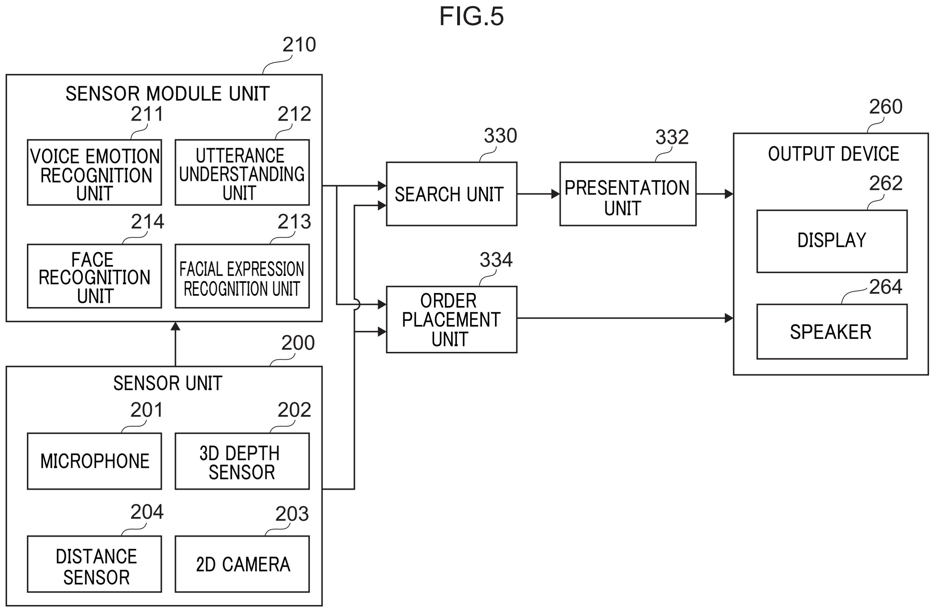

Fig. 5 schematically illustrates a functional configuration of a robot 100 according to the present embodiment. The robot 100 includes a sensor unit 200, a sensor module unit 210, a search unit 330, a presentation unit 332, an order placement unit 334, and an output device 260.

The output device 260 includes a display 262 that displays text, an image, and the like, and a speaker 264 that outputs a voice.

Among the constituent elements of the robot 100 illustrated in Fig. 5, the constituent elements other than the sensor unit 200 and the output device 260 are examples of the constituent elements of an information presentation system of the robot 100. Among the constituent elements of the robot 100 illustrated in Fig. 5, the functions of the constituent elements other than the sensor unit 200 and the output device 260 can be realized by a CPU operating based on a program. For example, the functions of these constituent elements can be implemented as the operation of the CPU by basic software (OS) and a program operating on the OS.

The sensor module unit 210 includes a voice emotion recognition unit 211, an utterance understanding unit 212, a facial expression recognition unit 213, and a face recognition unit 214. Information detected by the sensor unit 200 is input to the sensor module unit 210. The sensor module unit 210 analyzes information detected by the sensor unit 200 and outputs an analysis result to the search unit 330 and the order placement unit 334.

In a case in which character information indicating the utterance content of the user 10 output from the utterance understanding unit 212 is a content for which a search for information is requested, the search unit 330 performs a search based on the character information. The search unit 330 may be an interactive AI system, may perform a search from the Internet by using a search algorithm prepared in advance, or may perform a search by using a known search engine. Examples of the utterance content of the user 10 in this case include "tell me a good shaved ice shop in Kyoto", "Tell me a shop where a product A is cheap", and the like. The search result by the search unit 330 includes not only character information but also an image corresponding to the character information. For example, in a case in which the character information represents a store that provides shaved ice, the search result also includes an image corresponding to the store and an image of shaved ice, a ranking of a recommended shaved ice shop, and the like.

The presentation unit 332 presents text and an image to the user 10 by outputting the search result by the search unit 330 to the display 262. The presentation unit 332 may generate voice data corresponding to the character information included in the search result by the search unit 330, and output the voice data to the speaker 264 to present the search result to the user 10 by voice output. Instead of displaying the search result as it is, the presentation unit 332 may display recommended shaved ice according to the preference of the user 10 from a plurality of images, or may present a recommended store from the ranking of the shaved ice shop.

In a case in which the utterance content of the user 10 output from the utterance understanding unit 212 by analyzing a voice uttered by the user 10 in response to the search result presented by the presentation unit 332 is a content of requesting order placement to a store included in the search result presented by the presentation unit 332, the order placement unit 334 performs the following processing. That is, in this case, the order placement unit 334 places an order to the store by generating voice data for placing an order to the store, and outputting the voice data to the speaker 264. At this time, the order placement unit 334 also performs processing associated with order placement, such as making a call to the store and having a conversation with the clerk who answered the call. Examples of the utterance content of the user 10 in this case include "I want you to make a reservation for that shaved ice shop" and "I want to order a product A at a store B" in response to the search result presented by the robot. That is, the order placement here includes store reservation, product reservation, product order, and the like.

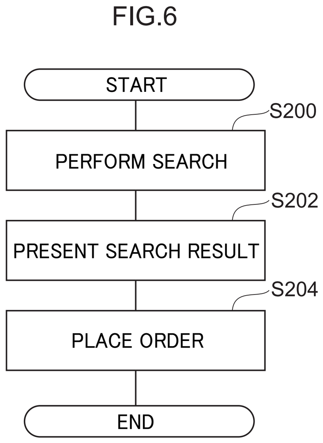

Fig. 6 schematically illustrates an example of an operation flow related to an operation of presenting information in the robot 100. At this time, it is assumed that the information analyzed by the sensor module unit 210 is input. "S" in the operation flow represents a step to be executed.

First, in Step S200, in a case in which the character information indicating the utterance content of the user 10 output from the utterance understanding unit 212 is a content for which a search for information is requested, the search unit 330 performs a search based on the character information.

In Step S202, the presentation unit 332 presents text and an image to the user 10 by outputting the search result by the search unit 330 to the display 262.

In Step S204, in a case in which the utterance content of the user 10 in response to the search result presented by the presentation unit 332 is a content of requesting order placement to a store included in the search result, the order placement unit 334 places an order to the store by generating voice data for placing an order to the store, and outputting the voice data to the speaker 264.

As described above, the robot 100 presents not only the text but also the image to the user as the search result. In a case in which the user desires order placement, the order placement is also performed. Therefore, it is possible to effectively support the user as compared with a case in which only text is presented to the user as in the interactive AI system.

The robot 100 according to the second embodiment is an example of an electronic device including the information presentation system. An application target of the information presentation system is not limited to the robot 100, and the information presentation system can be applied to various electronic devices. The function of the server 300 may be implemented by one or more computers. At least some functions of the server 300 may be implemented by a virtual machine. At least some of the functions of the server 300 may be implemented in a cloud.

Although the disclosure has been described using the embodiments, the technical scope of the disclosure is not limited to the scope described in the above embodiments. It is apparent to those skilled in the art that various modifications or improvements can be made to the above embodiments. It is apparent from the description of the claims that modes to which such changes or improvements are added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even though the operation flow in the claims, the specification, and the drawings is described using "first", "next", and the like for convenience, it does not mean that it is essential to perform in this order.

Regarding the above description, the following supplementary notes are further disclosed.

### (Supplementary Note 1)

An action control system including: an answer generation unit that generates an answer to a question of a user based on a conversation function of causing a robot and the user to have a conversation with each other; an emotion determination unit that determines an emotion of the user for the answer based on an emotion estimation function of estimating the emotion of the user; and an action determination unit that determines an action of the robot corresponding to the emotion.

### (Supplementary Note 2)

The action control system according to Supplementary Note 1, in which the action determination unit determines a specific action among a plurality of emotions.

### (Supplementary Note 3)

The action control system according to Supplementary Note 1, in which the action determination unit determines a first specific action in a case in which the emotion indicates a first emotion of the user, and determines a second specific action different from the first specific action in a case in which the emotion indicates a second emotion different from the first emotion of the user.

### (Supplementary Note 4)

The action control system according to Supplementary Note 3, in which the action determination unit determines, as the first specific action, an operation of bringing a hand of the robot into contact with a hand of the user by linking the hand of the robot with a movement of an arm of the user in a case in which the first emotion is happiness of the user, and determines, as the second specific action, an operation of raising the hand of the robot to an upper portion of the robot without linking the hand with the movement of the arm of the user in a case in which the second emotion is anger of the user.

### (Supplementary Note 5)

A program for causing a computer to function as the action control system according to any one of Supplementary Notes 1 to 4.

The disclosure of Japanese Patent Application No. 2023-047332 filed on March 23, 2023 and the disclosure of Japanese Patent Application No. 2023-061768 filed on April 5, 2023 are incorporated herein by reference in their entirety.

### Reference Signs List

- 1: SYSTEM
- 2: ACTION CONTROL SYSTEM
- 10a, 10b, 10c, 11a, 11b, 11c, 12a, 12b: USER
- 20: COMMUNICATION NETWORK
- 100, 101, 102: ROBOT
- 200: SENSOR UNIT
- 201: MICROPHONE
- 202: DEPTH SENSOR
- 203: CAMERA
- 204: DISTANCE SENSOR
- 210: SENSOR MODULE UNIT
- 211: VOICE EMOTION RECOGNITION UNIT
- 212: UTTERANCE UNDERSTANDING UNIT
- 213: FACIAL EXPRESSION RECOGNITION UNIT
- 214: FACE RECOGNITION UNIT
- 220: STORAGE UNIT
- 221: REACTION RULE
- 230: USER STATE RECOGNITION UNIT
- 231: USER ACTION RECOGNITION UNIT
- 232: ANSWER GENERATION UNIT
- 233: EMOTION DETERMINATION UNIT
- 234: ACTION DETERMINATION UNIT
- 235: ACTION CONTROL UNIT
- 236: CONTROL TARGET
- 237: COMMUNICATION PROCESSING UNIT
- 260: OUTPUT DEVICE
- 262: DISPLAY
- 264: SPEAKER
- 300: SERVER
- 330: SEARCH UNIT
- 332: PRESENTATION UNIT
- 334: ORDER PLACEMENT UNIT
- 1200: COMPUTER
- 1210: HOST CONTROLLER
- 1212: CPU
- 1214: RAM
- 1216: GRAPHIC CONTROLLER
- 1218: DISPLAY DEVICE
- 1220: INPUT/OUTPUT CONTROLLER
- 1222: COMMUNICATION INTERFACE
- 1224: STORAGE DEVICE
- 1226: DVD DRIVE
- 1227: DVD-ROM
- 1230: ROM
- 1240: INPUT/OUTPUT CHIP

## Claims

1. An action control system comprising:
an answer generation unit that generates an answer to a question of a user based on a conversation function of causing a robot and the user to have a conversation with each other;
an emotion determination unit that determines an emotion of the user in response to the answer based on an emotion estimation function of estimating the emotion of the user; and
an action determination unit that determines an action of the robot corresponding to the emotion.

2. The action control system according to claim 1, wherein the action determination unit determines a specific action among a plurality of emotions.

3. The action control system according to claim 1, wherein
the action determination unit
determines a first specific action in a case in which the emotion indicates a first emotion of the user, and
determines a second specific action different from the first specific action in a case in which the emotion indicates a second emotion different from the first emotion of the user.

4. The action control system according to claim 3, wherein
the action determination unit
determines, as the first specific action, an operation of bringing a hand of the robot into contact with a hand of the user by linking the hand of the robot with a movement of an arm of the user in a case in which the first emotion is happiness of the user,
and determines, as the second specific action, an operation of raising the hand of the robot to an upper portion of the robot without linking the hand with the movement of the arm of the user in a case in which the second emotion is anger of the user.

5. A program for causing a computer to function as the action control system according to any one of claims 1 to 4.

6. An information presentation system comprising:
a search unit that performs a search based on character information indicating an utterance content of a user;
and a presentation unit that presents a search result by the search unit to the user by at least one of an output of a voice, display of a text, or display of an image.

7. The information presentation system according to claim 6, further comprising: an order placement unit that generates voice data for performing order placement to a store and performs order placement to the store by outputting the voice data in a case in which an utterance of the user in response to the search result presented by the presentation unit is a content of requesting order placement to the store included in the search result presented by the presentation unit.

8. A program for causing a computer to function as the information presentation system according to claim 6 or 7.

9. A robot comprising:
the information presentation system according to claim 6 or 7; and
an output device that outputs at least one of the voice, the text, and the image, which are presented by the presentation unit.
